# EUROPÄISCHE PATENTSCHRIFT

(11) **EP 0 459 094 B1**
(45) Veröffentlichungstag und Bekanntmachung des Hinweises auf die Patenterteilung: **10.08.1994**
(21) Anmeldenummer: 91103484.1
(22) Anmeldetag: 07.03.1991
(51) Int. Cl.: B23K 11/30

(54) **Vorrichtung zum Profilieren einer Elektrodenrolle**
Device for controlling an electrode roll
Dispositif pour profiler une molette électrode

(30) Priorität: 02.05.1990 CH 1484/90
(43) Veröffentlichungstag der Anmeldung: 04.12.1991
(73) Patentinhaber: ELPATRONIC AG, CH-6300 Zug (CH)
(72) Erfinder: Aebersold, Hans, CH-8903 Birmensdorf (CH)

(56) Entgegenhaltungen:
- US-A- 2 467 027
- US-A- 2 957 975

## Beschreibung

Die Erfindung betrifft eine Vorrichtung zum Profilieren einer Elektrodenrolle, mit einem Werkzeugschlitten, der an einem Ständer geführt mittels eines Zustellantriebs mindestens annähernd radial zur Elektrodenrolle hin- und herbewegbar ist, und mindestens einem Profilierwerkzeug, das am Werkzeugschlitten gelagert ist.

Eine Vorrichtung dieser Gattung ist aus der US-A-2,467,027 bekannt. Dort ist auf dem Werkzeugschlitten neben dem Profilierwerkzeug eine Rändelrolle gelagert, wobei die Position der letzteren relativ zum Profilierwerkzeug mittels Anschlag einstellbar ist. Der Werkzeugschlitten als Ganzes wird mittels Federkraft gegen den Umfang der Elektrodenrolle zugestellt.

Demgegenüber liegt der Erfindung die Aufgabe zugrunde, eine Vorrichtung der genannten Art zu schaffen, die sich in besonders einfacher Weise dem im Laufe der Lebensdauer der Elektrodenrolle allmählich abnehmenden Durchmesser selbsttätig anpasst. Diese Aufgabe ist erfindungsgemäss gelöst durch
- einen Tasterschlitten, der einen Taster trägt, in bezug auf den Werkzeugschlitten in Richtung zur Elektrodenrolle hin vorgespannt und parallel zum Werkzeugschlitten bei dessen Zustellbewegung verschiebbar ist,
- einen einstellbaren Anschlag für den Werkzeugschlitten, der dessen Zustellbewegungen relativ zum Tasterschlitten und somit die Eindringtiefe des Profilierwerkzeugs in die Elektrodenrolle begrenzt, und
- eine Klemmvorrichtung, mit der sich der Werkzeugschlitten am Ständer festsetzen lässt, sobald die eingestellte Eindringtiefe des Profilierwerkzeugs erreicht ist.

Vorteilhafte Weiterbildungen der Erfindung ergeben sich aus den Unteransprüchen.

Die Erfindung wird im folgenden anhand schematischer Zeichnungen mit weiteren Einzelheiten erläutert. Es zeigen:
- Fig. 1: eine Vorrichtung zum Profilieren einer Elektrodenrolle in einem zur Achse der Elektrodenrolle normalen Schnitt,
- Fig. 2: den Schnitt II-II in Fig. 1,
- Fig. 3: einen vergrößerten Ausschnitt aus Fig. 1 und
- Fig. 4: den Schnitt IV-IV in Fig. 1.

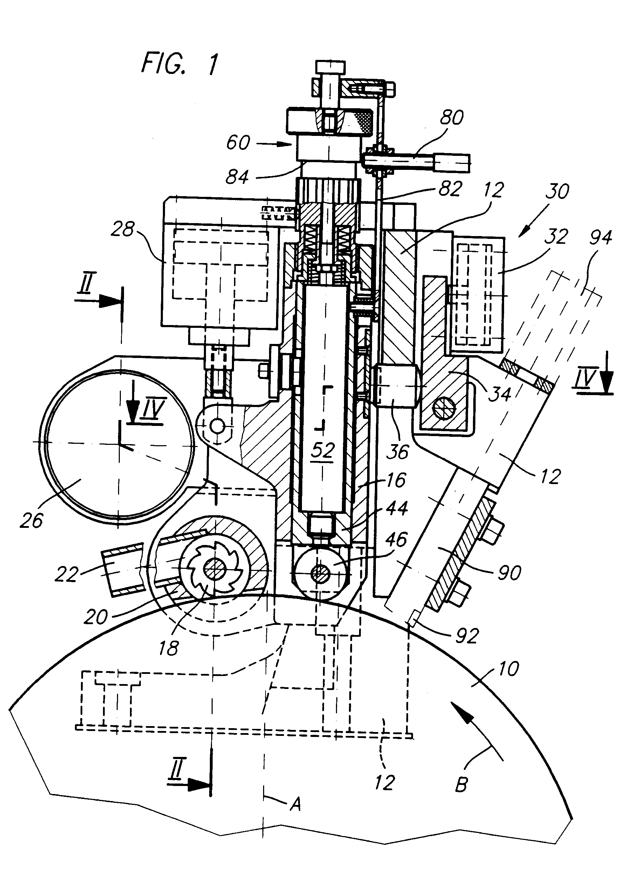

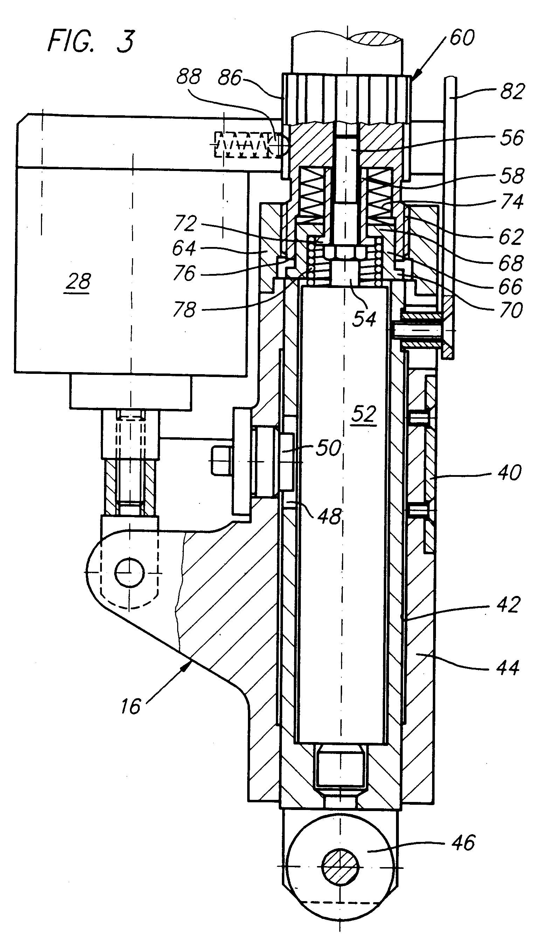

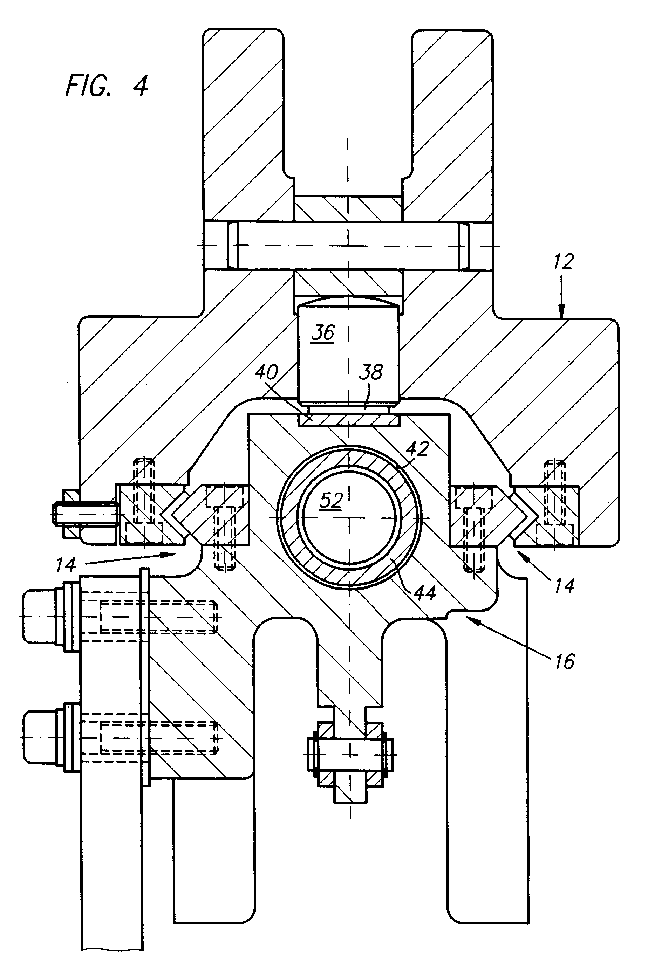

Die dargestellte Vorrichtung ist einer Elektrodenrolle 10 einer mit einem Paar solcher Elektrodenrollen arbeitenden elektrischen Widerstandsschweißmaschine zugeordnet und hat die Aufgabe, die beim Schweißen verschmutzende und verschleißende Mantelfläche der Elektrodenrolle 10 von Zeit zu Zeit zu reinigen und neu zu profilieren. Der zweiten, in den Zeichnungen nicht dargestellten Elektrodenrolle kann eine Vorrichtung zugeordnet sein, die mit der in Fig. 1 bis 4 dargestellten vollständig übereinstimmt.

Die dargestellte Vorrichtung hat einen Ständer 12, der an oder nahe einem nicht dargestellten, in üblicher Weise gestalteten Lager- und Antriebsgehäuse der Elektrodenrolle 10 befestigt ist. Am Ständer 12 sind Führungen 14, im dargestellten Beispiel Prismenführungen ausgebildet, die sich in geringem Abstand parallel zu einer die Achse der Elektrodenrolle 10 enthaltenden Axialebene A erstrecken. An den Führungen 14 ist ein Werkzeugschlitten 16 geführt, an dem ein Profilierwerkzeug 18, im dargestellten Beispiel ein Formfräser, gelagert ist.

Das Profilierwerkzeug 18 ist möglichst weitgehend von einem Gehäuse 20 umschlossen, das einen Saugstutzen 22 zum Absaugen von Spänen aufweist, die beim Profilieren der Elektrodenrolle 10 entstehen. Das Profilierwerkzeug 18 ist über einen Zahnriementrieb 24 von einem Motor 26 antreibbar, der am Werkzeugschlitten 16 befestigt und vorzugsweise ein stufenlos regelbarer Elektromotor ist.

Zum Zustellen des Werkzeugschlittens 16 dient ein Zustellantrieb 28; dieser ist im dargestellten Beispiel eine pneumatische oder hydraulische Kolbenzylindereinheit, deren Hub ausreichend groß ist, um ohne zusätzliche mechanische Nachstellung die Arbeitsposition des Werkzeugschlittens dem während der Lebensdauer der Elektrodenrolle 10 erheblich abnehmenden Durchmesser der Elektrodenrolle anzupassen.

Zum Festsetzen des Werkzeugschlittens 16 in jeder möglichen Arbeitsposition ist eine Klemmvorrichtung 30 vorgesehen. Zu dieser gehört eine am Ständer 12 befestigte pneumatische oder hydraulische Kolbenzylindereinheit 32, die über einen am Ständer 12 gelagerten Hebel 34 einen im Ständer normal zur Bewegungsrichtung des Werkzeugschlittens 16 verschiebbar geführten Bolzen 36 betätigt. Der Bolzen 36 trägt einen Reibbelag 38, der sich gegen eine am Werkzeugschlitten 16 befestigte Klemmplatte 40 aus gehärtetem Stahl drücken läßt.

Der Werkzeugschlitten 16 hat eine zu seinen Führungen 14 parallele Führungsbohrung 42, in der ein Tasterschlitten 44 verschiebbar geführt ist. Am der Elektrodenrolle 10 zugewandten Ende des Tasterschlittens 44 ist ein Taster 46 in Gestalt einer Rolle gelagert, deren Durchmesser mit dem Durchmesser des Fräsers übereinstimmt, der das Profilierwerkzeug 18 bildet. Der Tasterschlitten 44 hat die Form einer zylindrischen Hülse mit einem Langloch 48, in das ein am Werkzeugschlitten 16 befestigter Zapfen 50 derart eingreift, daß der Tasterschlitten 44 sich nicht um seine Achse verdrehen kann. Auf diese Weise ist dafür gesorgt, daß die Drehachse der Rolle, die den Taster 46 bildet, stets parallel zur Achse der Elektrodenrolle 10 bleibt.

In den Tasterschlitten 44 ist eine handelsübliche hydraulische Bremsvorrichtung 52 in Form eines Zylinders eingebaut, aus dessen von der Elektrodenrolle 10 abgewandtem, in Fig. 1 oberem Ende eine Kolbenstange 54 herausragt. Deren Ende liegt am Kopf einer Schraube 56 an, die sich durch eine Distanzhülse 58 erstreckt und zusammen mit dieser an einem Einstellkörper 60 befestigt ist. Der Einstellkörper 60 ist in seinem in Fig. 1 unteren Bereich glockenförmig gestaltet und weist außen ein Feingewinde 62 auf, das in eine am Werkzeugschlitten 16 befestigte Kappe 64 eingeschraubt ist.

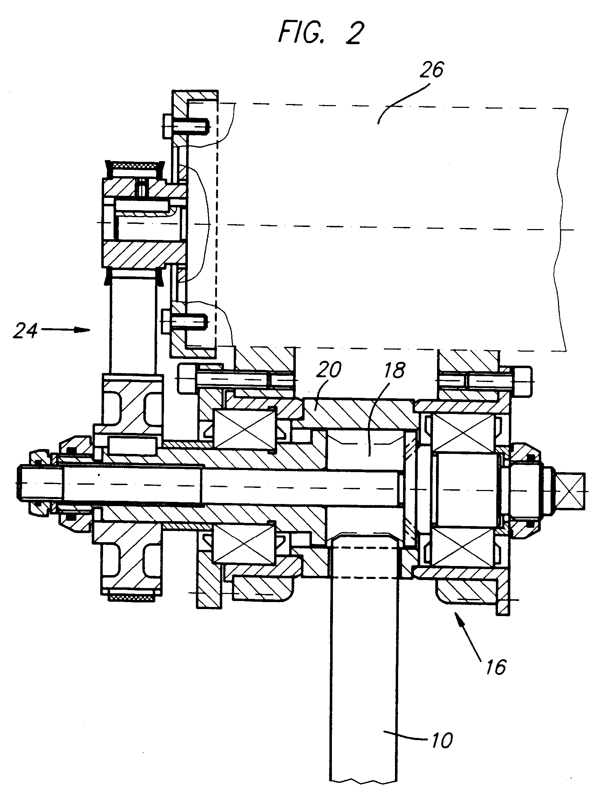

In dem glockenförmigen unteren Teil des Einstellkörpers 60 ist ein ebenfalls glockenförmiges Zwischenglied 66 axial verschiebbar geführt, das gemäß Fig. 2 oben einen nach innen ragenden Kragen 68 und unten einen radial nach außen ragenden Fußrand 70 aufweist. Die Distanzhülse 58 hat einen ebenfalls radial nach außen ragenden Fußrand 72, der gemäß Fig. 1 unter dem Kragen 68 des Zwischenglieds 66 angeordnet ist und somit den Weg begrenzt, auf dem sich das Zwischenglied 66 in bezug auf den Einstellkörper 60 nach unten schieben läßt.

Zwischen dem Einstellkörper 60 und dem Zwischenglied 66 ist eine Federanordnung 74 eingespannt, die im dargestellten Beispiel von einem Tellerfederpaket gebildet ist. Die Vorspannung der Federanordnung 74 wird über den Fußrand 70 des Zwischenglieds 66 auf den Tasterschlitten 44 übertragen.

Die höchstmögliche Stellung des Tasterschlittens 44 in bezug auf den Werkzeugschlitten 16 ist durch die Stellung des Einstellkörpers 60 bestimmt, der mehr oder weniger tief in die Kappe 64 eingeschraubt ist und dessen unterer Rand einen Anschlag 76 für den Fußrand 70 des Zwischenglieds 66 bildet.

Innerhalb des glockenförmigen Zwischenglieds 66 ist eine schraubenförmige Druckfeder 78 angeordnet, die über den Zylinder der Bremsvorrichtung 52 auf den Tasterschlitten 44 drückt, so daß dieser ständig bestrebt ist, seine durch Lage und Länge des Langlochs 48 bestimmte tiefstmögliche Stellung in bezug auf den Werkzeugschlitten 16 einzunehmen.

Die Position, die der Werkzeugschlitten 16 bei gegebener Stellung des Einstellkörpers 60 in bezug auf den Tasterschlitten 44 einnimmt, wird von einem Sensor 80 beobachtet, der mit einer Stange 82 am Tasterschlitten 44 befestigt ist und ein Signal abgibt, sobald eine am Einstellkörper 60 ausgebildete Schulter 84 eine Stellung einnimmt, die der jeweils gewünschten Eindringtiefe des Profilierwerkzeugs 18 in die Elektrodenrolle 10 entspricht. Auf dieses Signal hin wird die Klemmvorrichtung 30 betätigt.

Damit der Einstellkörper 60 sich nicht unbeabsichtigt verdrehen kann, hat er einen Kranz von in gleichmäßigen Winkelabständen angeordneten achsparallelen Rastnuten 86, in die eine im Ständer 12 radial geführte und vorgespannte Kugel 88 eindringen kann.

Das Profilierwerkzeug 18 und der Taster 46 sind symmetrisch in bezug auf die Axialebene A derart angeordnet, daß jeder Punkt auf dem Umfang der sich in Richtung des Pfeils B in Fig. 1 drehenden Elektrodenrolle 10 vom Taster 46 abgetastet wird, ehe er das Profilierwerkzeug 18 erreicht. Damit die Stellung des Tasters 46 nicht durch Schweißperlen oder sonstige Verunreinigungen verfälscht wird, die an der Mantelfläche der Elektrodenrolle 10 haften können, ist vor dem Taster 46 ein Schabwerkzeug 90 angeordnet, das sich radial zur Elektrodenrolle 10 erstreckt und in der bei Drehwerkzeugen üblichen Art eine von einem Hartmetallplättchen 92 gebildete Schneide aufweist. Das Schabwerkzeug 90 ist im Ständer 12 radial zur Elektrodenrolle 10 verschiebbar geführt und läßt sich mittels einer pneumatischen oder hydraulischen Kolbenzylindereinheit 94 mit einer vorgegebenen Kraft gegen die Umfangsfläche der Elektrodenrolle 10 drücken.

In Ruhestellung der abgebildeten Vorrichtung berührt keines ihrer Bauteile die Elektrodenrolle 10. Wenn diese von Zeit zu Zeit, beispielsweise nach einer vorgegebenen Anzahl Schweißungen, neu profiliert werden muß, wird der Zustellantrieb 28 derart unter Druck gesetzt, daß er den Werkzeugschlitten 16 radial zur Elektrodenrolle 10 hin, gemäß Fig. 1 also nach unten, verschiebt. Die Ruhelage des Tasterschlittens 44 in bezug auf den Werkzeugschlitten 16 ist so gewählt, daß bei der Verschiebung des Werkzeugschlittens der Taster 46 gegen die Mantelfläche der Elektrodenrolle 10 stößt, während des Profilierwerkzeug 18 noch einen Abstand von vorzugsweise mehreren Millimetern von der Elektrodenrolle 10 hat.

Der Taster 46 verhindert nun eine weitere Verschiebung des Tasterschlittens 44, so daß sich nur noch der Werkzeugschlitten 16 in Richtung zur Achse der Elektrodenrolle 10 verschiebt. Dabei wird zunächst die Feder 78 zusammengedrückt, bis der Fußrand 70 des Zwischenglieds auf dem Tasterschlitten 44 steht. Bis dahin bewegt sich der Werkzeugschlitten 16 mit großer Geschwindigkeit. Dann schiebt sich das glockenförmige untere Ende des Einstellkörpers 60 immer mehr über das Zwischenglied 66, wobei die Federanordnung 74 zusammengedrückt wird. Gleichzeitig wird die Kolbenstange 54 in die Bremsvorrichtung 52 hineingedrückt, und diese verlangsamt die weitere Bewegung des Werkzeugschlittens 16 derart, daß das Profilierwerkzeug 18, das vom Motor 26 angetrieben wird, sanft in die Elektrodenrolle 10 eindringt. Der Weg, den der Werkzeugschlitten 16 nun noch gegen den Widerstand der Federanordnung 74 und der Bremsvorrichtung 52 zurücklegt, wird durch den ursprünglich eingestellten Abstand zwischen dem Anschlag 76 und dem Fußrand 70 des Zwischenglieds 66 bestimmt.

Das Schabwerkzeug 90 wird von der Kolbenzylindereinheit 94 vorzugsweise derart betätigt, daß es schon vor dem Taster 46 die Mantelfläche der Elektrodenrolle 10 erreicht und diese reinigt, ehe der Taster 46 wirksam wird.

## Patentansprüche

1. Vorrichtung zum Profilieren einer Elektrodenrolle (10), mit einem Werkzeugschlitten (16), der an einem Ständer (12) geführt mittels eines Zustellantriebs (28) mindestens annähernd radial zur Elektrodenrolle (10) hin- und herbewegbar ist, und mindestens einem Profilierwerkzeug (18), das am Werkzeugschlitten (16) gelagert ist, **gekennzeichnet** durch
- einen Tasterschlitten (44), der einen Taster (46) trägt, in bezug auf den Werkzeugschlitten (16) in Richtung zur Elektrodenrolle (10) hin vorgespannt und parallel zum Werkzeugschlitten (16) bei dessen Zustellbewegung verschiebbar ist,
- einen einstellbaren Anschlag (76) für den Werkzeugschlitten, der dessen Zustellbewegungen relativ zum Tasterschlitten (44) und somit die Eindringtiefe des Profilierwerkzeugs (18) in die Elektrodenrolle begrenzt, und
- eine Klemmvorrichtung (30), mit der sich der Werkzeugschlitten (16) am Ständer (12) festsetzen lässt, sobald die eingestellte Eindringtiefe des Profilierwerkzeugs (18) erreicht ist.

2. Vorrichtung nach Anspruch 1, dadurch gekennzeichnet, dass die Klemmvorrichtung (30) von einem Sensor (80) gesteuert ist, der Relativbewegungen des Werkzeugschlittens (16) in bezug auf den Tasterschlitten (44) beobachtet.

3. Vorrichtung nach Anspruch 1 oder 2,
dadurch **gekennzeichnet,** daß das Profilierwerkzeug (18) und der Taster (46) symmetrisch in bezug auf eine Ebene (A) angeordnet sind, welche die Achse der Elektrodenrolle (10) enthält.

4. Vorrichtung nach Anspruch 3,
dadurch **gekennzeichnet,** daß das Profilierwerkzeug (18) ein Fräser ist und der Taster (46) eine am Umfang der Elektrodenrolle (10) abwälzbare Tastrolle ist, deren Durchmesser mit dem des Fräsers übereinstimmt.

5. Vorrichtung nach einem der Ansprüche 1 bis 4,
dadurch **gekennzeichnet,** daß der Werkzeugschlitten (16) an dem Tasterschlitten (44) über eine Bremsvorrichtung (52) abgestützt ist, mit der sich Relativbewegungen des Werkzeugschlittens (16) in bezug auf den Tasterschlitten (44) zur Elektrodenrolle (10) hin verlangsamen lassen.

6. Vorrichtung nach einem der Ansprüche 1 bis 5,
dadurch **gekennzeichnet,** daß vor dem Profilierwerkzeug (18), bezogen auf die Drehrichtung der Elektrodenrolle (10), ein Schabwerkzeug (90) angeordnet ist, das mit konstantem Druck an die Elektrodenrolle (10) andrückbar ist.

## Claims

1. A device for profiling an electrode roller (10), with a tool slide (16) which is guided on a post (12) by means of a feed drive (28) so that it can move approximately radially backwards and forwards in relation to the electrode roller (10), and with at least one profiling tool (18) which is mounted on the tool slide (16), characterised by
- a feeler slide (44) which carries a feeler (46), and which in relation to the tool slide (16) is biassed towards the electrode roller (10) and can move parallel to the tool slide (16) during the feed movement of the latter and,
- an adjustable stop (76) for the tool slide, which limits the feed movements of the latter in relation to the feeler slide (44) and thus limits the depth of feed of the profiling tool (18) into the electrode roller, and
- a clamping device (30) with which the tool slide (16) can be fixed to the post (12) as soon as the preset depth of feed of the profiling tool (18) is reached.

2. A device according to claim 1, characterised in that the clamping device (30) is controlled by a sensor (80) which monitors the relative movements of the tool slide (16) in relation to the feeler slide (44).

3. A device according to claims 1 or 2, characterised in that the profiling tool (18) and the feeler (46) are arranged symmetrically with respect to a plane (A) which contains the axis of the electrode roller (10).

4. A device according to Claim 3, characterised in that the profiling tool (18) is a milling cutter and the feeler (46) is a sensing roller in rolling contact with the circumference of the electrode roller (10), the diameter of which sensing roller corresponds to that of the milling cutter.

5. A device according to any one of claims 1 to 4, characterised in that the tool slide (16) is supported at the feeler slide (44) by means of a braking device (52), with which relative movements of the tool slide (16) towards the electrode roller (10) with respect to the feeler slide (44) can be slowed down.

6. A device according to any one of claims 1 to 5, characterised in that a scraping tool (90) is disposed in front of the profiling tool (18) with respect to the direction of rotation of the electrode roller (10), which scraping tool can be pressed against the electrode roller (10) under a constant pressure.

## Revendications

1. Dispositif pour profiler une molette de soudage (10), comportant un chariot porte-outil (16), qui est guidé de manière à être déplaçable en va-et-vient, au moyen d'un dispositif d'avance (28), au moins approximativement radialement par rapport à la molette de soudage (10), et au moins un outil de profilage (18), qui est monté sur le chariot porte-outil (16), caractérisé par
- un chariot porte-palpeur (44), qui porte un palpeur (46) qui est précontraint, par rapport au chariot porte-outil (16), en direction de la molette de soudage (10) et est déplaçable parallèlement au chariot porte-outil (16), lors du mouvement d'avance de ce dernier,
- une butée réglable (76) pour le chariot porte-outil, qui limite les mouvements d'avance de ce dernier par rapport au chariot porte-palpeur (44), et par conséquent la profondeur de pénétration de l'outil de profilage (18) dans la molette de soudage, et
- un dispositif de serrage (30), au moyen duquel le chariot porte-outil (16) peut être fixé au châssis (12) dès que la profondeur de pénétration réglée de l'outil de profilage (18) est atteinte.

2. Dispositif selon la revendication 1, caractérisé en ce que le dispositif de serrage (30) est commandé par un capteur (80), qui observe des déplacements relatifs du chariot porte-outil (16) par rapport au chariot porte-palpeur (44).

3. Dispositif selon la revendication 1 ou 2, caractérisé en ce que l'outil de profilage (18) et le palpeur (46) sont disposés symétriquement par rapport à un plan (A), qui contient l'axe de la molette de soudage (10).

4. Dispositif selon la revendication 3, caractérisé en ce que l'outil de profilage (18) est une fraise et que le palpeur (46) est un galet de palpage, qui peut rouler sur la circonférence de la molette de soudage (10) et dont le diamètre est identique à celui de la fraise.

5. Dispositif selon l'une des revendications 1 à 4, caractérisé en ce que le chariot porte-outil (16) prend appui sur le chariot porte-palpeur (44) par l'intermédiaire d'un dispositif de freinage (52), au moyen duquel des déplacements relatifs du chariot porte-outil (16) par rapport au chariot de palpage (44), peuvent être ralentis en direction de l'électrode de soudage (10).

6. Dispositif selon l'une des revendications 1 à 5, caractérisé en ce qu'en avant de l'outil de profilage (18) est disposé, d'une manière rapportée au sens de rotation de la molette de soudage (10), un outil de raclage (90), qui peut être repoussé avec une pression constante contre la molette de soudage (10).
